# EUROPÄISCHE PATENTSCHRIFT

(11) **EP 3 598 250 B1**
(45) Veröffentlichungstag und Bekanntmachung des Hinweises auf die Patenterteilung: **10.03.2021**
(21) Anmeldenummer: 18184202.2
(22) Anmeldetag: 18.07.2018
(51) Int. Cl.: G05B 19/042

(54) **SENSORANORDNUNG**
SENSOR ASSEMBLY
SYSTÈME DE DÉTECTION

(43) Veröffentlichungstag der Anmeldung: 22.01.2020
(73) Patentinhaber: Leuze electronic GmbH + Co. KG, 73277 Owen/Teck (DE)
(72) Erfinder: Doll, Manfred, 73230 Kirchheim unter Teck (DE)
(74) Vertreter: Ruckh, Rainer Gerhard

(56) Entgegenhaltungen:
- EP-A2- 2 233 994
- EP-A2- 2 637 067
- US-A1- 2016 034 158
- US-A1- 2017 091 252

## Beschreibung

Die Erfindung betrifft eine Sensoranordnung.

Derartige Sensoranordnungen werden typischerweise für die Kontrolle oder Überwachung des Betriebs von Anlagen eingesetzt.

Anlagen im Sinne der vorliegenden Erfindung dienen generell zur Durchführung von Arbeitsprozessen, wobei die Anlagen beispielsweise aus einer oder mehreren Maschinen bestehen können. Generell umfasst der Begriff Anlage auch bewegliche, insbesondere fahrbare Systeme.

Sensoranordnungen für derartige Anlagen umfassen Überwachungssensoren, die zu Überwachungszwecken oder zur Kontrolle von an oder mit der Anlage durchgeführten Arbeitsprozessen dienen. Beispielsweise können mit Überwachungssensoren Gefahrenbereiche an der Anlage überwacht werden. Dringt beispielsweise eine Person in einen solchen Gefahrenbereich ein, wird dies vom Überwachungssensor erkannt. Dieser generiert dann ein Sicherheitssignal, das beispielsweise zum Stillsetzen der Anlage führt. Weiterhin können Überwachungssensoren vorgesehen sein, deren Sensorsignale zur Steuerung oder Regelung von Arbeitsprozessen verwendet werden können. Beispiele hierfür sind Förderanlagen, welche mehrere Bearbeitungszonen zur Bearbeitung von Objekten aufweisen. Die Überwachungssensoren können dann zur Objektverfolgung und zur Steuerung bzw. Regelung von in den Bearbeitungszonen durchgeführten Arbeitsprozessen eingesetzt werden.

Der Betrieb der Anlage wird typischerweise von einer zentralen Steuerung gesteuert. Hierzu sind die einzelnen Überwachungssensoren an die Steuerung angeschlossen, so dass deren Sensorsignale in der Steuerung zur Verfügung stehen, um somit den Betrieb der Anlage überwachen und kontrollieren zu können.

Die Überwachungssensoren können dabei über Einzel-Verkabelungen an die Steuerung angeschlossen sein. Alternativ können die Überwachungssensoren in einem Bussystem integriert sein.

Die US 2016/0034158 A1 betrifft ein Netzwerk mit mehreren Sensoren, die Zustandsdaten von Maschinen oder Geräten erfassen. Die Sensorsignale der Sensoren werden einer Rechnereinheit zugeführt, wo die Sensorsignale gespeichert bzw. ausgewertet werden.

Die US 2017/0091252 betrifft ein computer-implementiertes Verfahren zum Speichern und Zusammenführen von Sensordaten in einer Datenbasis. Mit den Sensoren, die die Sensordaten generieren, wird eine Umgebung überwacht.

Die EP 2 233 994 A2 betrifft eine Vorrichtung zur Überwachung und Bedienung von Prozesssensoren, umfassend ein Elektronikmodul, einen mit dem Elektronikmodul trennbar verbundenen Prozesssensor und ein separates, mit dem Elektronikmodul trennbar verbundenes Bediengerät. Das Elektronikmodul umfasst einen Mikroprozessor mit einer Speichereinheit, eine Mehrzahl von digitalen Schnittstellen, und ein Mittel zur Weiterleitung von analogen Signalen von dem Prozesssensor an ein Prozessleitsystem. Der Prozesssensor, welcher zur Bestimmung und Überwachung mindestens einer chemischen oder physikalischen Messgröße eines Messmediums ausgebildet ist, umfasst eine Sensoreinheit zur Erfassung der chemischen oder physikalischen Messgröße und Generierung von analogen Messdaten, und eine mit der Sensoreinheit untrennbar verbundene Elektronikeinheit.

Die EP 2 637 067 A2 betrifft eine Sensoranordnung zum Detektieren eines sicheren Anlagenzustandes einer automatisiert betriebenen Anlage mit einem Eingangskreis zum Aufnehmen eines ersten Eingangssignals und zum Aufnehmen von zumindest einem weiteren Eingangssignal. Das erste Eingangssignal hängt von dem zu detektierenden sicheren Anlagenzustand ab. Das weitere Eingangssignal hängt von einem weiteren Zustand ab. Die Sensoranordnung besitzt ferner einen ersten und zumindest einen zweiten Ausgang zum Ausgeben eines ersten und eines zweiten Ausgangssignals, sowie eine Auswerteeinheit, die dazu ausgebildet ist, das erste Eingangssignal fehlersicher auszuwerten und in Abhängigkeit davon das erste und das zweite Ausgangssignal an dem ersten und zweiten Ausgang zu erzeugen.

Der Erfindung liegt die Aufgabe zugrunde, eine Sensoranordnung mit einer erweiterten Funktionalität bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit einer Anzahl von Überwachungssensoren zur Überwachung einer Anlage. Wenigstens einem Teil der Überwachungssensoren sind Zustandserfassungssensoren zugeordnet, wobei mit den Zustandserfassungssensoren Zustandsgrößen der Anlage ermittelt und an den jeweils zugeordneten Überwachungssensor weitergegeben werden. Die Überwachungssensoren weisen jeweils eine Sensoreinheit, eine Rechnereinheit und eine Schnittstelle auf. Die Rechnereinheit ist zur Verarbeitung von Sensorsignalen der Sensoreinheit und zur Verarbeitung von Sensorsignalen der zugeordneten Zustandserfassungssensoren ausgebildet. Sensorsignale der Zustandserfassungssensoren oder in der Rechnereinheit in Abhängigkeit der Sensorsignale generierte Daten werden von dem jeweiligen Überwachungssensor über die Schnittstelle an eine übergeordnete Einheit weitergegeben.

Die Erfindung betrifft weiterhin ein entsprechendes Verfahren.

Die erfindungsgemäße Sensoranordnung bildet ein hierarchisches System derart aus, dass nicht Überwachungssensoren an eine übergeordnete Einheit weitergegeben werden, welche insbesondere den Betrieb der Anlage bestimmt.

Erfindungsgemäß sind eine Anzahl von Überwachungssensoren, vorzugsweise allen Überwachungssensoren ein oder mehrere Zustandserfassungssensoren zugeordnet, die Zustandsgrößen der Anlage erfassen.

Damit wird eine signifikante Erhöhung der Funktionalität der Sensoranordnung erzielt, wobei wesentlich ist, dass die Überwachungssensoren eine Doppelfunktion erfüllen. Einerseits üben die Überwachungssensoren in bekannter Weise ihre Sensorfunktion aus, wobei mit der Sensoreinheit der Überwachungssensoren generierte Sensorsignale über die Rechnereinheit und die Schnittstellen der Überwachungssensoren an die übergeordnete Einheit weitergegeben werden, wo diese für Kontroll- oder Überwachungsfunktionen genutzt werden können. Andererseits werden in den Überwachungssensoren Sensorsignale von zugeordneten Zustandserfassungssensoren eingelesen und diese über die Rechnereinheit direkt oder nach einer Vorverarbeitung ebenfalls an die übergeordnete Einheit weitergegeben. Wesentlich hierbei ist, dass die in den Überwachungssensoren bereits vorhandenen Rechnereinheiten und Schnittstellen für diese Zusatzfunktionen mitgenutzt werden können, so dass die Überwachungssensoren für die Erfassung und Weiterleitung der Sensorsignale der Zustandserfassungssensoren keine separaten, zusätzlichen Komponenten benötigen.

Die Überwachungssensoren benötigen lediglich eine geeignete Eingangsstruktur, um Sensorsignale der zugeordneten Zustandserfassungssensoren einlesen zu können, wobei die Eingangsstruktur beispielsweise aus einer Anordnung von analogen oder digitalen Eingängen bestehen kann.

Die Zustandserfassungssensoren können dabei separate, von dem Überwachungssensor räumlich getrennte Einheiten bilden, so dass die Einsatzorte der Zustandserfassungssensoren und der zugeordneten Überwachungssensoren verschieden sein können. Prinzipiell ist auch möglich, Zustandserfassungssensoren in den Überwachungssensor zu integrieren.

Gemäß einer vorteilhaften Ausführungsform werden Arbeitsprozesse der Anlage in Abhängigkeit von Sensorsignalen der Überwachungssensoren überwacht oder kontrolliert.

Ein Beispiel für eine Überwachungsfunktion ist eine mit einem Überwachungssensor durchgeführte Überwachung eines Gefahrenbereichs an der Anlage. Mit dem Überwachungssensor wird beispielsweise überwacht, ob sicherheitskritische Objekte oder Personen in den Gefahrenbereich eindringen. Wird ein solcher Eingriff in den Gefahrenbereich detektiert, generiert der Überwachungssensor ein Sicherheitssignal, anhand dessen beispielsweise die Anlage oder ein Teil hiervon stillgesetzt wird, um Gefahrensituationen zu vermeiden. In diesem Fall sind die Überwachungssensoren bevorzugt als Sicherheitssensoren ausgebildet, die für einen Einsatz im Bereich der Sicherheitstechnik geeignet sind und demzufolge einen fehlersicheren Aufbau aufweisen.

Weiterhin können anhand von Sensorsignalen von Überwachungssensoren mit der Anlage durchgeführte Arbeitsprozesse kontrolliert werden. Beispielsweise kann mit dem Überwachungssensor eine Objektverfolgung von in der Anlage geförderten Objekten erfolgen. Weiterhin werden in Abhängigkeit von Sensorsignalen der Überwachungssensoren Steuer- oder Regelungsvorgänge durchgeführt.

Insbesondere können abhängig von Sensorsignalen der Überwachungssensoren Antriebe geregelt oder gesteuert werden, um mit diesen kontrollierte Arbeitsprozesse durchzuführen.

Generell können die Überwachungssensoren als Ultraschallsensoren, Datensensoren, induktive oder kapazitive Sensoren ausgebildet sein.

Besonders vorteilhaft sind Überwachungssensoren in Form von optischen Sensoren vorgesehen.

Beispiele für derartige optische Sensoren sind Lichtschranken, Lichttaster, Lichtvorhänge, Distanzsensoren oder Barcodelesegeräte.

Besonders vorteilhaft werden mit den Zustandserfassungssensoren als Zustandsgrößen Anlagendaten erfasst.

Die Anzahl und die Einsatzsorte der Zustandserfassungssensoren sind vorteilhaft so gewählt, dass mit den Zustandserfassungssensoren der gesamte Anlagenzustand erfasst werden kann. Insbesondere können mit dem Zustandserfassungssensors Beeinträchtigungen oder Ausfälle von Anlagenkomponenten erfasst werden.

Beispielsweise sind Zustandserfassungssensoren als Beschleunigungssensoren ausgebildet, mittels derer das Schwingungsverhalten von Komponenten der Anlage erfasst wird.

Mit den so ausgebildeten Zustandserfassungssensoren können Informationen über die mechanische Belastung der Anlage gewonnen werden.

Weiterhin können Zustandserfassungssensoren für eine Zustandskontrolle von Komponenten der Anlage ausgebildet sein.

Beispielsweise kann mit einem Zustandserfassungssensor der Verschleiß einer Anlagenkomponente erfasst werden. Derartige Zustandserfassungssensoren können beispielsweise aktuelle Parameter von Antrieben oder dergleichen erfassen, um so Informationen über eventuelle Beeinträchtigungen oder Fehlfunktionen zu erlangen.

Weiterhin werden mit den Zustandserfassungssensoren als Zustandsgrößen auf die Anlage einwirkende externe Einflussgrößen erfasst.

Beispielsweise sind die Zustandserfassungssensoren von Temperatursensoren oder Feuchtigkeitssensoren gebildet.

Vorteilhaft weisen die Schnittstellen der Überwachungssensoren jeweils ein serielles Protokoll auf.

Die Schnittstellen sind dann als serielle Datenschnittstellen, z. B. als IO-Link oder als Ethernet-Schnittstellen ausgebildet.

Die Anlage wird von einer zentralen Steuerung gesteuert, die von einem Steuerrechner oder dergleichen gebildet ist. Dieser Steuerrechner kann gemäß einer ersten Ausgestaltung der Erfindung die übergeordnete Einheit bilden, der nicht nur die Sensorsignale der Überwachungssensoren, sondern auch die Sensorsignale oder Daten der Zustandserfassungssensoren, die in dem Überwachungssensor gesammelt bzw. verarbeitet werden, zugeführt sind.

Gemäß einer zweiten Ausgestaltung der Erfindung ist die übergeordnete Einheit von einem Datenbank-Server einer Cloud gebildet. In diesem Fall übernimmt der Steuerrechner nun die Funktion der Überwachung und Kontrolle der Anlage anhand der Sensorsignale der Überwachungssensoren, wobei die Sensorsignale oder Daten der Zustandserfassungssensoren dem Datenbank-Server und damit der Cloud zugeführt sind.

Gemäß einer weiteren Variante ist wenigstens ein Master-Sensor vorgesehen, in welchem eine Aufbereitung von Daten der Überwachungssensoren durchgeführt wird und die aufbereiteten Daten von dem Master-Sensor an einen Steuerrechner der Anlage oder einen Datenbank-Server einer Cloud als übergeordnete Einheit weitergegeben werden.

Der Master-Sensor kann beispielsweise von einem der Überwachungssensoren gebildet sein, der gegenüber den anderen Überwachungssensoren eine erste übergeordnete Einheit bildet und seine Daten an den Datenbank-Server oder dem Steuerrechner als zweite übergeordnete Einheit weitergibt.

Generell werden in den der übergeordneten Einheit die Sensorsignale bzw. Daten aller Zustandserfassungssensoren gesammelt und bevorzugt auch ausgewertet. Anhand dieser Daten wird zeitaufgelöst vorzugsweise der gesamte Zustand der Anlage erfasst.

Dabei werden in Abhängigkeit ermittelten Zustandsgrößen in der übergeordneten Einheit Ausgangsgrößen für die Dokumentation des Anlagenzustands generiert.

Weiterhin werden in Abhängigkeit von ermittelten Zustandsgrößen in der übergeordneten Einheit Maßnahmen zur Erhöhung der Verfügbarkeit der Anlage abgebildet.

Anhand der Daten der Zustandserfassungssensoren können Maßnahmen für einen kontinuierlichen und störungsfreien Betrieb der Anlage abgeleitet werden. Beispielsweise können Wartungsintervalle definiert werden. Auch können drohende Ausfälle von Komponenten der Anlage frühzeitig erfasst werden, so dass diese rechtzeitig repariert oder ausgetauscht werden können, um unerwünschte Ausfälle oder Stillstandszeiten der Anlage zu vermeiden. Die relevanten Daten können über die übergeordnete Einheit, insbesondere über eine Cloud unmittelbar dem Anlagenhersteller oder dem jeweiligen Sensorhersteller zur Verfügung gestellt werden, so dass diese im Bedarfsfall sofort Reparaturarbeiten, Wartungsarbeiten oder Bestellvorgänge für Ersatzteile initiieren können.

Die Erfindung wird im Folgenden anhand der Zeichnungen erläutert. Es zeigen:
- Figur 1: Schematische Darstellung einer Anlage mit einer Sensoranordnung.
- Figur 2: Schematische Darstellung von Komponenten einer Sensoranordnung mit einem zugeordneten Steuerrechner und einem Datenbank-Server.

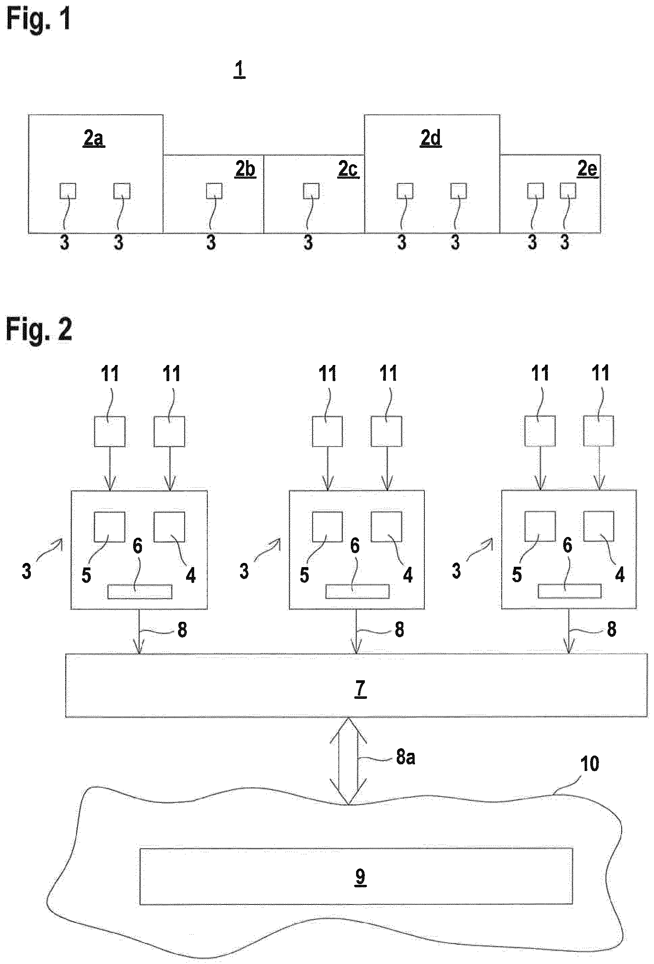

Figur 1 zeigt schematisch eine Anlage 1, die zur Bearbeitung von Werkstücken mehrere Bearbeitungszentren 2a - 2e aufweist. Die nicht gesondert dargestellten Werkstücke werden über Fördereinheiten nacheinander den einzelnen Bearbeitungszentren 2a - 2e zugeführt, um dann in diesen bearbeitet zu werden.

Ein Beispiel hierfür ist eine Anlage 1 zur Bearbeitung von Folien oder Textilbahnen.

Die in den einzelnen Bearbeitungszentren 2a - 2e durchgeführten Arbeitsprozesse werden mittels Überwachungssensoren 3 kontrolliert. Vorzugsweise werden in Abhängigkeit von mit den Überwachungssensoren 3 generierten Sensorsignalen Steuer- oder Regelungsprozesse, beispielsweise von Antrieben in den Bearbeitungszentren 2a - 2e durchgeführt. Die Überwachungssensoren 3 sind bevorzugt von optischen Sensoren gebildet.

Figur 2 zeigt ein Ausführungsbeispiel des erfindungsgemäßen Netzwerks mit einer Anzahl von Überwachungssensoren 3.

In Figur 2 sind exemplarisch drei Überwachungssensoren 3 dargestellt, wobei generell auch eine andere Anzahl von Überwachungssensoren 3 möglich ist. Wie Figur 2 zeigt, weist ein Überwachungssensor 3 eine Sensoreinheit 4 auf, die beispielsweise wenigstens einen Lichtstrahlen emittierenden Sender und einen Lichtstrahlen empfangenden Empfänger umfasst. Von dem Empfänger generierte Empfangssignale werden von einer Rechnereinheit 5, die von einem Mikroprozessor oder dergleichen gebildet ist, ausgewertet, um entsprechende Ausgangssignale, beispielsweise Schaltsignale oder Distanzsignale zu generieren. Im Folgenden werden diese Ausgangssignale Sensorsignale genannt.

Jeder Überwachungssensor 3 weist weiterhin eine Schnittstelle 8 auf, die ein serielles Protokoll aufweist. Die Schnittstellen 8 können beispielsweise als IO-Link oder Ethernet-Schnittstellen 8 ausgebildet sein.

Die Überwachungssensoren 3 sind über die Schnittstellen 8 an einen Steuerrechner 7 angeschlossen, der eine zentrale Steuerung für die Anlage 1 bildet. In dem Steuerrechner 7 wird in Abhängigkeit der Sensorsignale der Überwachungssensoren 3 die Anlage 1 überwacht und kontrolliert. Insbesondere wird mittels des Steuerrechners 7 der Anlagenbetrieb gesteuert.

Der Steuerrechner 7 ist über eine Datenschnittstelle 8a mit einem Datenbank-Server 9 einer Cloud 10 verbunden.

Erfindungsgemäß sind den einzelnen Überwachungssensoren 3 Zustandserfassungssensoren 11 zugeordnet. Bei der Ausführungsform gemäß Figur 2 sind jedem Überwachungssensor 3 zwei Zustandserfassungssensoren 11 zugeordnet. Generell können dem Überwachungssensor 3 unterschiedliche Zustandserfassungssensoren 11 zugeordnet sein, wobei generell auch einem oder mehreren Überwachungssensoren 3 kein Zustandserfassungssensor 11 zugeordnet sein kann.

Bei der Ausführungsform der Figur 2 bilden die Zustandserfassungssensoren 11 bezüglich der Überwachungssensoren 3 separate Einheiten, die an Eingangsstrukturen der Überwachungssensoren 3 angeschlossen sind. Prinzipiell können auch Zustandserfassungssensoren 11 in dem Überwachungssensor 3 integriert sein.

Mit den Zustandserfassungssensoren 11 wird der aktuelle Zustand der Anlage 1 zeitaufgelöst erfasst. Insbesondere können die Zustandserfassungssensoren 11 als Beschleunigungssensoren ausgebildet sein, die das Schwingungsverhalten und damit die mechanische Beladung der Anlage 1 ermitteln. Weiterhin können die Zustandserfassungssensoren 11 zur Zustandskontrolle von Komponenten der Anlage 1 dienen, insbesondere von Antriebskomponenten der Anlage 1. Derartige Zustandserfassungssensoren 11 können als Strom- oder Spannungsprozessoren oder auch als Kraftsensoren ausgebildet sein. Schließlich können Zustandserfassungssensoren 11 zur Erfassung von externen Einflussgrößen dienen. Derartige Zustandserfassungssensoren 11 können als Temperatur- oder Feuchtigkeitssensoren ausgebildet sein.

Erfindungsgemäß werden die in den Überwachungssensoren 3 vorhandenen Strukturen, insbesondere die Rechnereinheit 5 und die Schnittstelle 8, dazu genutzt, die Sensorsignale der Zustandserfassungssensoren 11 zu sammeln und ggf. vorzuverarbeiten oder auszuwerten und schließlich diese Sensorsignale oder daraus gewonnene Daten an eine übergeordnete Einheit weiterzuleiten. Als übergeordnete Einheit kann insbesondere der Steuerrechner 7 verwendet werden.

Im vorliegenden Fall bildet der Datenbank-Server (9) die übergeordnete Einheit, so dass die Sensorsignale bzw. Daten in der Cloud 10 zur Verfügung stehen und dort weiterverarbeitet werden können.

Anhand der Sensorsignale oder Daten des Zustandserfassungssensors 11 wird der gesamte Zustand der Anlage 1 ermittelt. Abhängig hiervon können Wartungsintervalle abgeleitet werden. Auch können verschleißbehaftete oder funktionsbeeinträchtigte Komponenten der Anlage 1 ermittelt werden, so dass diese rechtzeitig vor einem drohenden Stillstand der Anlage 1 repariert oder ausgetauscht werden können. Die einzelnen zur Aufrechterhaltung des Betriebs der Anlage 1 notwendigen Informationen werden über die Cloud 10 direkt den Herstellern der Anlage 1 und der Überwachungssensoren 3 bzw. Zustandserfassungssensoren 11 zur Verfügung gestellt, so dass diese rechtzeitig erforderliche Maßnahmen für einen störungsfreien Betrieb der Anlage 1 treffen können.

### Bezugszeichenliste

- (1): Anlage
- (2a - e): Bearbeitungszentren
- (3): Überwachungssensor
- (4): Sensoreinheit
- (5): Rechnereinheit
- (6): Schnittstelle
- (7): Steuerrechner
- (8): Schnittstelle
- (8a): Datenschnittstelle
- (9): Datenbank-Server
- (10): Cloud
- (11): Zustandserfassungssensor

## Patentansprüche

1. Sensoranordnung mit einer Anzahl von Überwachungssensoren (3) zur Überwachung einer Anlage (1), wobei wenigstens einem Teil der Überwachungssensoren (3) Zustandserfassungssensoren (11) zugeordnet sind, wobei mit den Zustandserfassungssensoren (11) Zustandsgrößen der Anlage (1) ermittelt und an den jeweils zugeordneten Überwachungssensor (3) weitergegeben werden, dass die Überwachungssensoren (3) jeweils eine Sensoreinheit (4), eine Rechnereinheit (5) und eine Schnittstelle (8) aufweisen, wobei die Rechnereinheit (5) zur Verarbeitung von Sensorsignalen der Sensoreinheit (4) und zur Verarbeitung von Sensorsignalen der zugeordneten Zustandserfassungssensoren (11) ausgebildet ist, und dass Sensorsignale der Zustandserfassungssensoren (11) oder in der Rechnereinheit (5) in Abhängigkeit der Sensorsignale generierte Daten von dem jeweiligen Überwachungssensor (3) über die Schnittstelle (8) an eine übergeordnete Einheit weitergegeben werden.

2. Sensoranordnung nach Anspruch 1, **dadurch gekennzeichnet, dass** Arbeitsprozesse der Anlage (1) in Abhängigkeit von Sensorsignalen der Überwachungssensoren (3) überwacht oder kontrolliert werden.

3. Sensoranordnung nach Anspruch 2, **dadurch gekennzeichnet, dass** in Abhängigkeit von Sensorsignalen der Überwachungssensoren (3) Steuer- oder Regelungsvorgänge durchgeführt werden.

4. Sensoranordnung nach einem der Ansprüche 1 bis 3, **dadurch gekennzeichnet, dass** Überwachungssensoren (3) in Form von optischen Sensoren vorgesehen sind.

5. Sensoranordnung nach einem der Ansprüche 1 bis 4, **dadurch gekennzeichnet, dass** mit den Zustandserfassungssensoren (11) als Zustandsgröße Anlagendaten erfasst werden.

6. Sensoranordnung nach Anspruch 5, **dadurch gekennzeichnet, dass** Zustandserfassungssensoren (11) als Beschleunigungssensoren ausgebildet sind, mittels derer das Schwingungsverhalten von Komponenten der Anlage (1) erfasst wird.

7. Sensoranordnung nach Anspruch 5, **dadurch gekennzeichnet, dass** Zustandserfassungssensoren (11) für eine Zustandskontrolle von Komponenten der Anlage (1) ausgebildet sind.

8. Sensoranordnung nach einem der Ansprüche 1 bis 4, **dadurch gekennzeichnet, dass** mit den Zustandserfassungssensoren (11) als Zustandsgrößen auf die Anlage (1) einwirkende externe Einflussgrößen erfasst werden.

9. Sensoranordnung nach Anspruch 8, **dadurch gekennzeichnet, dass** die Zustandserfassungssensoren (11) von Temperatursensoren oder Feuchtigkeitssensoren gebildet sind.

10. Sensoranordnung nach einem der Ansprüche 1 bis 9, **dadurch gekennzeichnet, dass** die Schnittstellen (8) der Überwachungssensoren (3) jeweils ein serielles Protokoll aufweisen.

11. Sensoranordnung nach einem der Ansprüche 1 bis 10, **dadurch gekennzeichnet, dass** die übergeordnete Einheit ein Steuerrechner (7) der Anlage (1) oder ein Datenbank-Server (9) einer Cloud (10) ist.

12. Sensoranordnung nach einem der Ansprüche 1 bis 10, **dadurch gekennzeichnet, dass** wenigstens ein Master-Sensor vorgesehen ist, in welchem eine Aufbereitung von Daten der Überwachungssensoren (3) durchgeführt wird, und dass die aufbereiteten Daten von dem Master-Sensor an einen Steuerrechner (7) der Anlage (1) oder einen Datenbank-Server (9) einer Cloud (10) als übergeordnete Einheit weitergegeben werden.

13. Sensoranordnung nach einem der Ansprüche 1 bis 12, **dadurch gekennzeichnet, dass** in Abhängigkeit ermittelten Zustandsgrößen in der übergeordneten Einheit Ausgangsgrößen für die Dokumentation des Anlagenzustands generiert werden.

14. Sensoranordnung nach einem der Ansprüche 1 bis 13, **dadurch gekennzeichnet, dass** in Abhängigkeit von ermittelten Zustandsgrößen in der übergeordneten Einheit Maßnahmen zur Erhöhung der Verfügbarkeit der Anlage (1) abgeleitet werden.

15. Verfahren zum Betrieb einer Sensoranordnung mit einer Anzahl von Überwachungssensoren (3) zum Überwachen einer Anlage, wobei wenigstens einem Teil der Überwachungssensoren (3) Zustandserfassungssensoren zugeordnet sind, wobei mit den Zustandserfassungssensoren (11) Zustandsgrößen der Anlage (1) ermittelt und an den jeweils zugeordneten Überwachungssensor (3) weitergegeben werden, dass die Überwachungssensoren (3) jeweils eine Sensoreinheit (4), eine Rechnereinheit (5) und eine Schnittstelle (8) aufweisen, wobei die Rechnereinheit (5) zur Verarbeitung von Sensorsignalen der Sensoreinheit (4) und zur Verarbeitung von Sensorsignalen der zugeordneten Zustandserfassungssensoren (11) ausgebildet sind, und dass Sensorsignale der Zustandserfassungssensoren (11) oder in der Rechnereinheit (5) in Abhängigkeit der Sensorsignale generierte Daten von dem jeweiligen Überwachungssensor (3) über die Schnittstelle (8) an eine übergeordnete Einheit weitergegeben werden.

## Claims

1. A sensor assembly with a number of monitoring sensors (3) for monitoring an installation (1), wherein state detection sensors (11) are associated with at least some of the monitoring sensors (3), wherein state variables of the installation (1) are determined with the state detection sensors (11) and are passed on to the respectively associated monitoring sensor (3), that the monitoring sensors (3) each have a sensor unit (4), a computer unit (5) and an interface (8), the computer unit (5) being designed to process sensor signals from the sensor unit (4) and to process sensor signals from the associated status detection sensors (11), and in that sensor signals from the status detection sensors (11) or data generated in the computer unit (5) as a function of the sensor signals are passed on from the respective monitoring sensor (3) to a higher-level unit via the interface (8).

2. The sensor assembly according to claim 1, **characterised in that** working processes of the installation (1) are monitored or controlled as a function of sensor signals of the monitoring sensors (3).

3. The sensor assembly according to claim 2, **characterised in that** control or regulation processes are carried out as a function of sensor signals from the monitoring sensors (3).

4. The sensor assembly according to one of claims 1 to 3, **characterised in that** monitoring sensors (3) in the form of optical sensors are provided.

5. The sensor assembly according to one of claims 1 to 4, **characterised in that** system data is detected as a state variable with the state detection sensors (11).

6. The sensor assembly according to claim 5, **characterised in that** state detection sensors (11) are designed as acceleration sensors by means of which the vibration behaviour of components of the system (1) is detected.

7. The sensor assembly according to claim 5, **characterised in that** condition detection sensors (11) are designed for condition monitoring of components of the system (1).

8. The sensor assembly according to one of the claims 1 to 4, **characterised in that** external influencing variables acting on the system (1) are detected as state variables with the state detection sensors (11).

9. The sensor assembly according to claim 8, **characterised in that** the state detection sensors (11) are formed by temperature sensors or humidity sensors.

10. The sensor assembly according to one of claims 1 to 9, **characterised in that** the interfaces (8) of the monitoring sensors (3) each have a serial protocol.

11. The sensor assembly according to any one of claims 1 to 10, **characterised in that** the highr-level unit is a control computer (7) of the plant (1) or a database server (9) of a cloud (10).

12. The sensor assembly according to one of claims 1 to 10, **characterised in that** at least one master sensor is provided in which a processing of data of the monitoring sensors (3) is carried out and that the processed data is forwarded by the master sensor to a control computer (7) of the system (1) or a database server (9) of a cloud (10) as a highr-level unit.

13. The sensor assembly according to one of claims 1 to 12, **characterised in that** output variables for the documentation of the system status are generated in the highr-level unit depending on the determined status variables.

14. The sensor assembly according to one of claims 1 to 13, **characterised in that** measures for increasing the availability of the system (1) are derived as a function of determined state variables in the higher-level unit.

15. A method for operating a sensor assembly having a number of monitoring sensors (3) for monitoring an installation, with state detection sensors being assigned to at least some of the monitoring sensors, with the state detection sensors (11) being used to determine large states of the installation (1) and being passed on to the respectively assigned monitoring sensor (3), in that the monitoring sensors (3) each have a sensor unit (4), a computer unit (5) and an interface (8), the computer unit (5) being designed for processing sensor signals of the sensor unit (4) and for processing sensor signals of the associated status detection sensors (11), and in that sensor signals of the status detection sensors (11) or data generated in the computer unit (5) as a function of the sensor signals are passed on from the - respective monitoring sensor (3) to a higher-level unit via the interface (8).

## Revendications

1. Système de détection avec plusieurs capteurs de surveillance (3) pour la surveillance d'une installation (1), des capteurs de détection d'état (11) étant associés à au moins une partie des capteurs de surveillance (3), des grandeurs d'état de l'installation (1) étant déterminées avec les capteurs de détection d'état (11) et transmises au capteur de surveillance (3) respectivement associé, que les capteurs de surveillance (3) présentent chacun une unité de capteurs (4), une unité de calcul (5) et une interface (8), l'unité de calcul (5) étant conçue pour traiter des signaux de capteurs provenant de l'unité de capteurs (4) et pour traiter des signaux de capteurs provenant des capteurs de détection d'état (11) associés, et en ce que les signaux de capteurs provenant des capteurs de détection d'état (11) ou les données générées dans l'unité de calcul (5) en fonction des signaux de capteurs sont transmis du capteur de surveillance (3) respectif à une unité de niveau supérieur par l'intermédiaire de l'interface (8).

2. Système de détection selon la revendication 1, **caractérisé en ce que** les processus de travail de l'installation (1) sont surveillés ou commandés en fonction des signaux des capteurs de surveillance (3).

3. Système de détection selon la revendication 2, **caractérisé en ce que** les processus de commande ou de régulation sont effectués en fonction des signaux des capteurs de surveillance (3).

4. Système de détection selon l'une des revendications 1 à 3, **caractérisé en ce que** des capteurs de surveillance (3) sous forme de capteurs optiques sont prévus.

5. Système de détection selon l'une des revendications 1 à 4, **caractérisé en ce que** les données du système sont détectées comme une variable d'état avec les capteurs de détection d'état (11).

6. Système de détection selon la revendication 5, **caractérisé en ce que** les capteurs de détection d'état (11) sont conçus comme des capteurs d'accélération au moyen desquels le comportement vibratoire des composants du système (1) est détecté.

7. Système de détection selon la revendication 5, **caractérisé en ce que** les capteurs de détection d'état (11) sont conçus pour la surveillance de l'état des composants du système (1).

8. Système de détection selon l'une des revendications 1 à 4, **caractérisé en ce que** les variables d'influence externes agissant sur le système (1) sont détectées comme des variables d'état avec les capteurs de détection d'état (11).

9. Système de détection selon la revendication 8, **caractérisé en ce que** les capteurs de détection d'état (11) sont formés par des capteurs de température ou des capteurs d'humidité.

10. Système de détection selon l'une des revendications 1 à 9, **caractérisé en ce que** les interfaces (8) des capteurs de surveillance (3) ont chacune un protocole série.

11. Système de détection selon l'une quelconque des revendications 1 à 10, **caractérisé en ce que** l'unité de niveau supérieur est un ordinateur de contrôle (7) de l'installation (1) ou un serveur de base de données (9) d'un cloud (10).

12. Système de détection selon l'une des revendications 1 à 10, **caractérisé en ce qu'**il est prévu au moins un capteur principal dans lequel est effectué un traitement des données des capteurs de surveillance (3). et que les données traitées sont transmises par le capteur principal à un ordinateur de contrôle (7) du système (1) ou à un serveur de base de données (9) d'un cloud (10) en tant qu'unité de niveau supérieur.

13. Système de détection selon l'une des revendications 1 à 12, **caractérisé en ce que** les variables de sortie pour la documentation de l'état du système sont générées dans l'unité de niveau supérieur en fonction des variables d'état déterminées.

14. Système de détection selon l'une des revendications 1 à 13, **caractérisé en ce que** les mesures visant à augmenter la disponibilité du système (1) sont dérivées en fonction de variables d'état déterminées dans l'unité de niveau supérieur.

15. Procédé d'exploitation d'un système de détection comportant plusieurs capteurs de surveillance (3) pour surveiller une installation, des capteurs de détection d'état étant associés à au moins une partie des capteurs de surveillance, les capteurs de détection d'état (11) étant utilisés pour déterminer de grands états de l'installation (1) et étant transmis au capteur de surveillance (3) respectivement associé, en ce que les capteurs de surveillance (3) comportent chacun une unité de capteurs (4), une unité de calcul (5) et une interface (8), l'unité de calcul (5) étant conçue pour le traitement des signaux de capteurs de l'unité de capteurs (4) et pour le traitement des signaux de capteurs des capteurs de détection d'état (11) associés, et en ce que les signaux de capteurs des capteurs de détection d'état (11) ou les données générées dans l'unité de calcul (5) en fonction des signaux de capteurs sont transmis du capteur de surveillance (3) respectif à une unité de niveau supérieur par l'intermédiaire de l'interface (8).
